# EUROPÄISCHE PATENTSCHRIFT

(11) **EP 4 204 128 B1**
(45) Veröffentlichungstag und Bekanntmachung des Hinweises auf die Patenterteilung: **11.11.2026**
(21) Anmeldenummer: 20841707.1
(22) Anmeldetag: 21.12.2020
(51) Int. Cl.: B01D 61/14, B01D 61/20, B01D 65/02, B01D 65/10, C02F 1/44

(54) **ÜBERWACHUNG DER INTEGRITÄT EINER ULTRAFILTRATIONSMEMBRAN IM RÜCKSPÜLBETRIEB**
MONITORING THE INTEGRITY OF AN ULTRAFILTRATION MEMBRANE DURING A BACKFLUSHING OPERATION
SURVEILLANCE DE L'INTÉGRITÉ D'UNE MEMBRANE D'ULTRAFILTRATION PENDANT UNE OPÉRATION DE LAVAGE À CONTRE-COURANT

(43) Veröffentlichungstag der Anmeldung: 05.07.2023
(73) Patentinhaber: WILO SE, 44263 Dortmund (DE)
(72) Erfinder: GÖTZEL, Arne, 44263 Dortmund (DE); HAMMER, Marcel, 44263 Dortmund (DE); KSOLL, Michael, 44263 Dortmund (DE); REICHELT, Michael, 44263 Dortmund (DE); RÖSLER, Danny, 44263 Dortmund (DE)
(74) Vertreter: Cohausz Hannig Borkowski Wißgott
(86) Internationale Anmeldenummer: PCT/EP2020/087513
(87) Internationale Veröffentlichungsnummer: WO 2022/135673

(56) Entgegenhaltungen:
- WO-A1-2005/077499
- WO-A1-2007/104797
- WO-A1-96/28236
- CN-A- 110 217 858
- CN-U- 211 328 943
- FR-A1- 2 716 385
- US-B1- 6 755 970

## Beschreibung

Die Erfindung betrifft ein Verfahren zur Überwachung der Integrität einer Ultrafiltrationsmembran in einem Filtermodul einer Ultrafiltrationsanlage zur Trinkwasseraufbereitung während eines Rückspülbetriebs, in dem zur Reinigung der Membran Filtrat zu einer Filtratseite des Filtermoduls geleitet wird und eine Rohwasserseite des Filtermoduls über eine Retentatleitung mit einem Ablauf zur Abscheidung von Retentat verbunden ist. Des Weiteren betrifft die Erfindung eine Ultrafiltrationsanlage, die eingerichtet ist, das Verfahren durchzuführen.

Ultrafiltrationsanlagen für die Trinkwasserversorgung in Gebäuden mit parallel arbeitenden Filtermodulen sind an sich bekannt. Sie finden dort Anwendung, wo eine zentrale Versorgung mit Wasser in trinkbarer Qualität nicht oder nicht dauerhaft möglich ist. Als Gebäude mit derartigen Anlagen sind insbesondere Wohn- und Mehrfamilienhäuser, Hotels, Krankenhäuser, Bürogebäude, sowie öffentliche Einrichtungen hervorzuheben, die eine Vielzahl an Wasserverbrauchern wie Waschbecken, Toiletten, Duschen, Badewannen etc. umfassen und dadurch über den Tag betrachtet einen äußerst dynamischen Wasserverbrauch haben. Dabei ist auch ein Kreuzfahrtschiff als Gebäude im Sinne eines mobilen Hotels zu verstehen.

Filtermodule einer Ultrafiltrationsanlage besitzen einen Zulaufanschluss auf der Rohwasserseite zur Zuführung von Rohwasser und einen Ablaufanschluss auf der Filtratseite zur Lieferung gefilterten Wassers, nachfolgend Filtrat genannt. Zwischen dem Zulauf- und dem Ablaufanschluss liegt je nach Bauart des Filtermoduls eine oder eine Vielzahl von Filtermembranen, die Mikroorganismen und Schmutzpartikel in dem zugeführten Rohwasser herausfiltern. Die Filtermembran(en) trennt! trennen somit räumlich die Rohwasserseite von der Filtratseite. Nachfolgend wird ungeachtet der tatsächlichen Anzahl an Filtermembranen im Modul nur von "einer" Filtermembran im Singular gesprochen, obgleich auch zwei oder eine Vielzahl von Filtermembranen vorhanden sein kann/ können. Die Filtermembran trennt somit räumlich die Rohwasserseite von der Filtratseite. Mit der Zeit sammeln sich zunehmend Partikel und Mikroorganismen als Filterkuchen an der Membranoberfläche an, was der Fachmann unter dem Begriff "Fouling" kennt. Hierdurch reduziert sich zunehmend die Filterleistung und es wird erforderlich, die Membran zu reinigen. Dies kann durch sogenanntes Rückspülen erfolgen, bei dem die Filtermembran in zum Filterbetrieb umgekehrte Richtung durchströmt wird, d.h. von der Filtratseite zur Rohwasserseite. Hierzu wird Filtrat zur Filtratseite des Filtermoduls geleitet wird und die Rohwasserseite des Filtermoduls über eine Retentatleitung mit einem Ablauf zur Abscheidung des Retentat verbunden. Als Rückspülflüssigkeit wird also Filtrat verwendet, das zuvor von der Ultrafiltrationsanlage hergestellt worden ist.

Für den ordnungsgemäßen Betrieb der Ultrafiltrationsanlage ist es unerlässlich, dass die bzw. alle Filtermembranen intakt sind, da anderenfalls Schmutzpartikel und Mikroorganismen wie z.B. Bakterien auf die Filtratseite gelangen und die Anlage dort bis zu den Verbrauchern kontaminieren. Eine aufwändige Reinigung und gegebenenfalls Desinfektion der Rohrleitungen und verbundenen hydraulischen Komponenten wären dann erforderlich. Eine Integrität der Membran ist nicht mehr gegeben, wenn Schadstellen, wie z.B. Löcher, Risse, größer als die absolute Porengröße der Membran vorhanden sind. Derartige Defekte entstehen durch heftige Druckstöße z.B. beim Öffnen oder Schließen von Verbraucherventilen, durch äußere Einwirkungen wie z.B. mechanische Stöße bei einem unsachgemäßen Transport, Alterung der Membran und durch chemische Beeinflussung der Membranoberfläche durch z.B. Verunreinigungen im Zulaufwasser, Zusetzen von Desinfektionsmitteln, etc. Aus diesem Grund werden bei Ultrafiltrationsanlagen in regelmäßigen Zeitabständen, meist täglich, sogenannte Integritätstests durchgeführt.

Einige solcher Tests sind als Bestandteil einer Integritätsüberwachung einer Filtrationsanlage beispielsweise in der amerikanischen technischen Norm ASTM D6908-06 (Jahr 2017) und im Membrane Filtration Guidance Manual der US EPA (Nov. 2005) beschrieben. Diese Integritätsüberwachung findet bei Anlagen der Ultrafiltration (UF) und Mikrofiltration (MF) hauptsächlich als Druckabfalltest und bei Umkehrosmosen (RO) und Nanofiltration (NF) meistens als Vakuumabfalltest Anwendung.

Die hauptsächlich angewandten Integritätstests sind luftbasiert, da die feuchten Filtermembranen abhängig von der Höhe des angewandten Druckes, für Luft undurchlässig sind. Dabei kann entweder Luft herausgesaugt werden, um ein Vakuum zu erzeugen, oder als Druckluft eingebracht werden. Dies kann lokal, d.h. gezielt bei einem bestimmten Filtermodul oder global bei der gesamten oder einem Teil der Anlage, d.h. bei mehreren Filtermodulen gleichzeitig erfolgen. Ferner kann dies entweder von der Rohwasserseite oder von der Filtratseite aus erfolgen. Es wird dann untersucht bzw. gemessen, ob und gegebenenfalls, wie groß der Druckabfall über der Membran bzw. den Filtermodulen über der Zeit ist, um eine Aussage über die Integrität zu treffen. Die Höhe des angewandten Transmembrandruckes bei einem Druckabfalltest entscheidet über die minimale Größe des detektierbaren Defektes. So sind für die Überprüfung der Rückhaltung von Bakterien (0,45 µm) ein Druck von 7 bar und von Viren (25 nm) ein Prüfdruck von 120 bar notwendig. Diese hohen Drücke sind bei üblichen Filtermodulen mit einem z.B. maximal zulässigen Transmembrandruck von 4 bar hinsichtlich der mechanischen Stabilität nicht erreichbar. So ist ein üblicher Transmembrandruck für die Integritätsprüfung von 1 bar nur ausreichend, um Defekte bis zu einer minimalen Größe von 3 µm zu detektieren. Werden eine Vielzahl von Filtermodulen gleichzeitig getestet, reduzieren die natürliche Diffusion von Luft durch die intakte Membranwand in das Medium Wasser und Minileckagen außerhalb der Membranwand die Sensitivität der Druckabfallmessung.

Ein weiterer Nachteil dieses Verfahrens besteht in dem nicht unerheblichen Aufwand bei der Durchführung des Integritätstests, weil das oder die Filtermodule vor dem Integritätstest entleert und anschließend wieder befüllt werden muss/ müssen. Ein Teil der Luft verbleibt außerdem im Anschluss an den Integritätstest in den Filtermodulen und reduziert die Filtereffizienz. Sie muss deshalb mit einer zusätzlichen Maßnahme durch entsprechende Entlüftung entfernt werden. Ein weiterer Nachteil luftbasierter Testverfahren besteht in der Notwendigkeit, den Betrieb der Filtrationsanlage ganz oder teilweise während des Tests zu unterbrechen. Sie liefert dann folglich kein oder weniger Trinkwasser mehr, was je nach Aufstellungsort der Anlage, z.B. für Hotels, inakzeptabel ist, oder eine Anwendung des Verfahrens nur außerhalb der Hauptverbrauchszeit, d.h. nachts, ermöglicht. Ein Zusätzlicher Nachteil ist außerdem der technische Aufwand zur Durchführung des Verfahrens, da die Anlage mit entsprechenden Leitungen, Ventilen und einer ölfreien Druckluftzufuhr, z.B. einem Kompressor ausgestattet werden muss.

Eine sehr sensitive Methode zur Integritätsüberwachung besteht darin, molekulare oder partikuläre Marker in das Rohwasser in einer definierten Dosis zu injizieren und zu prüfen, ob und gegebenenfalls in welchem Umfang diese Marker auf der Filtratseite auftreten. Die molekulare bzw. partikulare Größe eines Markers ist größer als die nominale Porenweite der Filtermembran, so dass der Marker bei intakter Membran die Filtratseite nicht oder nur in minimalem Umfang erreicht. Dieses Verfahren hat den Vorteil, dass es während des Filtrationsbetriebs angewendet werden kann. Allerdings erfordert das Verfahren einen zusätzlichen apparativen Aufwand zur Dosierung und Injektion des Markers sowie eine zusätzliche Sensorik oder nachfolgende Laboranalytik auf der Filtratseite, um das Auftreten des Markers im Filtrat nachzuweisen. Des Weiteren reduziert der Marker die Filtereffizienz, da er nicht durch die Filtermembran gelangt, sondern zu einem erhöhten Fouling der Membran beiträgt. Ferner ist ein solches Verfahren bei Trinkwasser nicht zulässig, da durch den Marker die Genußtauglichkeit des Wassers eingeschränkt werden könnte.

Weitere Verfahren zur Überwachung der Integrität von Membranen arbeiten über die Analyse der Filtratwasserqualität. Dies kann entweder über die Analyse der Partikelanzahl und -größenverteilung im Filtrat bzw. die Analyse der Trübheit erfolgen. Beide Verfahren benötigen jedoch einen hohen technischen Aufwand für die optischen Sensoren und Messdatenverarbeitung.

Es ist ferner möglich, bei gleichbleibender Zulaufwasserqualität über einen Anstieg der Permeabilität der Membran einen signifikanten Integritätsfehler zu detektieren. Allerdings haben Schwankungen in der Zulaufwasserqualität einen Einfluss auf die Permeabilität und können nicht im Prozess kontinuierlich sensorisch ermittelt werden. Für die Ermittlung der Permeabilität muss der Durchfluss ermittelt werden, was nach dem Stand der Technik mit kostenintensiven Sensoren erfolgt. Die starken Schwankungen des Volumenstroms in der Gebäudetechnik werden von vielen bekannten Sensoren allerdings erst nach einer langen Ansprechzeit erfasst und sind damit häufig fehlerbehaftet.

Bei Anwendungen mit konstanten Volumenströmen und gleichbleibender Zulaufwasserqualität kann alternativ zur Permeabilität der Abfall des Transmembrandrucks (TMP) der Filtermembran(en) eine Aussage über deren Integrität treffen.

WO2005/077499A1, WO2007104797A1, WO9628236A1 beschreiben verschiedene Membranintegritätstests.

Vor diesem Hintergrund ist es Aufgabe der vorliegenden Erfindung, ein einfaches Verfahren zur zuverlässigen Überwachung der Integrität einer Ultrafiltrationsmembran in einem Filtermodul bereitzustellen, das ohne Unterbrechung des Filterbetriebs anwendbar ist und mit einfachen technischen Mitteln auskommt. Ferner ist es Aufgabe der Erfindung, eine entsprechende Ultrafiltrationsanlage zur Durchführung des Verfahrens bereitzustellen.

Diese Aufgabe wird durch ein Verfahren gemäß Anspruch 1 und eine Ultrafiltrationsanlage nach Anspruch 14 gelöst. Vorteilhafte Weiterbildungen sind in den jeweiligen Unteransprüchen angegeben und werden nachfolgend erläutert. Erfindungsgemäß ist bei dem Verfahren zur Überwachung der Integrität einer Ultrafiltrationsmembran in einem Filtermodul einer Ultrafiltrationsanlage zur Trinkwasseraufbereitung vorgesehen, dass es während eines Rückspülbetriebs ausgeführt wird, bei dem zur Reinigung der Membran Filtrat zu einer Filtratseite des Filtermoduls geleitet wird und eine Rohwasserseite des Filtermoduls über eine Retentatleitung mit einem Ablauf zur Abscheidung von Retentat verbunden ist. Dabei wird das Volumen des innerhalb eines Zeitraums abgeschiedenen Retentats ermittelt wird und dieses Volumen oder ein daraus berechneter Wert mit einem Erwartungswert verglichen und ein Integritätsverlust angenommen, wenn das Volumen oder der daraus berechnete Wert über dem Erwartungswert liegt. Es wird somit ein Vergleich zwischen dem ermittelten Retentatvolumen und dem Erwartungswert durchgeführt und ein Integritätsverlust angenommen, wenn das Retentatvolumen größer als der Erwartungswert ist.

Der Kerngedenke der Erfindung besteht somit zum einen darin, die Integritätsprüfung während des ohnehin bei der Ultrafiltrationsanlage erforderlichen Rückspülbetriebs durchzuführen, so dass der Filterbetrieb unbeeinträchtigt bleibt. Als Rückspülbetrieb ist in diesem Zusammenhang ein solcher Betrieb zu verstehen, in welchem die Membran entgegen der Filtrationsrichtung durchströmt wird, d.h. von der Filtratseite beaufschlagt wird. In diesem Fall wird die Membran von sauberem Filtrat durchströmt so dass eine Bewertung der Integrität ohne Einfluss der Zulaufwasserqualität möglich ist. Zum anderen wird das abgeschiedene Retentatvolumen zur Feststellung eines Integritätsfehlers bewertet. Dies kann mit einfachen technischen Mitteln erfolgen, beispielsweise mit einem Volumenzähler in der Retentatleitung, insbesondere einem Wasserzähler, so dass weder eine teure, komplexe Sensorik noch eine leistungsstarke, teure Hard- und Software für die Auswertung der Messdaten erforderlich ist.

Ein weiterer Vorteil des Verfahrens besteht darin, dass genau festgestellt werden kann, in welchem Filtermodul ein Integritätsfehler vorliegt, jedenfalls, wenn nur ein einzelnes Filtermodul rückgespült wird. Werden mehrerer Filtermodule gleichzeitig rückgespült, kann eine Bestimmung desjenigen mit der defekten Membran dadurch erfolgen, dass die Filtermodule anschließend einzeln rückgespült werden.

Der Zeitraum, während dem das Retentatvolumen ermittelt wird, nachfolgend auch Messzeitraum genannt, kann in einer Ausführungsvariante einen Teil des Zeitraums sein, für den das Filtermodul rückgespült wird. Er ist also kürzer als die Rückspülzeit und kann variabel innerhalb der Rückspülzeit liegen. Vorzugsweise liegt dieser Messzeitraum am Ende der Rückspülzeit, d.h. er endet gleichzeitig mit der Beendigung des Rückspülbetriebs. Dies hat den Vorteil, dass die Volumenbestimmung genauer wird, da die Änderung des Retentatvolumens pro Zeiteinheit in diesem Endzeitraum deutlich geringer ist als am Anfang, weil sich der überwiegende Schmutz bereits zu Beginn des Rückspülens von der Membran löst. Es sei angemerkt, dass die Rückspülzeit die gesamte Zeit ist, für die die Membran entgegen der Filtrationsrichtung durchströmt wird. Selbst wenn man aus Sicht der durch die Rückspülung erzielten Reinigungswirkung den Rückspülvorgang als beendet betrachten und den Messzeitraum über dieses Ende (nun ist die Membran sauber) hinaus erstrecken lassen könnte, so ist dies im Sinne der vorliegenden Erfindung nach wie vor ein Messzeitraum, der am Ende der Rückspülzeit liegt und gleichzeitig mit der Beendigung des Rückspülbetriebs endet.

Die Rückspülung kann auf beliebige Weise ausgelöst werden, beispielsweise zu einer bestimmten Uhrzeit, in festgelegten zeitlichen Intervallen, bei Überschreiten eines bestimmten Transmembrandrucks, einer bestimmten Permeabilität oder auch manuell. Gleichzeitig zur Auslösung der Rückspülung wird auch das erfindungsgemäße Verfahren gestartet.

Das Abbruchkriterium für die Rückspülung kann in der Regel ebenfalls beliebig sein. Gemäß einer Variante kann die Rückspülung für eine festgelegte zeitliche Dauer erfolgen. In diesem Fall kann auch der Messzeitraum festgelegt sein und so beginnen, dass er zeitglich mit der Rückspüldauer oder auch früher endet. Dies hat den Vorteil, dass für den erfindungsgemäßen Integritätstest kein zusätzliches Wasservolumen verbraucht werden muss.

Alternativ kann die Rückspülung beendet werden, wenn ein bestimmtes Retentatvolumen abgeschieden worden ist oder wenn der Transmembrandruck unter einen vorgegebenen Grenzwert fällt. In diesem Fall ist die Rückspüldauer nicht im Vorhinein bekannt. Der Messzeitraum kann dennoch festgelegt sein, wobei er rechtzeitig zu beginnen hat, um rechtzeitig vor Ende des Rückspülbetriebs zu enden. Der Messzeitraum kann beispielsweise einige Sekunden nach Beginn der Rückspülung starten. Alternativ kann die Rückspülung allerdings auch trotz möglicherweise vorzeitigem Rückspülerfolg solange fortgesetzt werden, bis der Messzeitraum beendet ist. Ein fester Messzeitraum ist wichtig, um die Vergleichbarkeit des ermittelten Retentatvolumens mit dem Erwartungswert zu gewährleisten, da dieser werksseitig oder bei Inbetriebnahme der Anlage zu bestimmen und einer Anlagensteuerung der Ultrafiltrationsanlage zu hinterlegen ist.

In der Praxis liegt die Rückspüldauer zwischen 5 Sekunden und 4 Minuten. In Anbetracht des mit der Rückspülung verbundenen Wasserverbrauchs ist es jedoch von Vorteil, die Rückspüldauer so kurz wie möglich zu wählen, beispielsweise weniger als 60 Sekunden, insbesondere zwischen 5 und 20 Sekunden, was vergleichsweise kurz ist. Wird als Messzeitraum nur ein Teil der Rückspüldauer verwendet, ist er entsprechend noch kürzer. Da die Volumenermittlung aber umso ungenauer ist, je länger der Messzeitraum ist, kann der Messzeitraum in einer Ausführungsvariante die gesamte Dauer des Rückspülbetriebs umfassen. Mit anderen Worten wird das Volumen des während des gesamten Rückspülbetriebs abgeschiedenen Retentats ermittelt. Der Messzeitraum beginnt und endet dann folglich gleichzeitig mit der Rückspülung.

In einer Ausführungsvariante kann der Messzeitraum zwischen 5 und 10 Sekunden betragen. Hier wird ein besonderer Vorteil des erfindungsgemäßen Verfahrens deutlich, da es keinen Volumenstromsensor benötigt, die ohnehin eine derart hohe Ansprechzeit (Trägheit) haben, dass innerhalb des genannten Messzeitraums kein valider Messwert vorliegen würde.

Der Volumenzähler kann einen Impulsgeber aufweisen, wobei in diesem Fall die Anzahl Impulse während des Zeitraums gezählt und mit einem Volumenwert pro Impuls multipliziert werden, um das gesuchte Retentatvolumen zu erhalten. Ein solcher Volumenzähler hat den Vorteil, dass er technisch besonders einfach, zuverlässig und preiswert ist. Ferner können dessen Impulse leicht ausgewertet werden.

Für die Überwachung der Integrität, genauer betrachtet der Porengöße und der Dicke der Membran, die über die Lebenszeit der Membran unverändert bleiben sollte, eignet sich alternativ zum Retentatvolumen, der Retentatvolumenstrom und die Permeabilität der Ultrafiltrationsmembran. Somit kann in einer Ausführungsvariante der Erfindung der aus dem Volumen berechnete Wert der Retentatvolumenstrom oder die Permeabilität im Messzeitraum sein. Vorzugsweise wird hierbei der durchschnittliche Retentatvolumenstrom bzw. die durchschnittliche Permeabilität bestimmt werden, da deren Berechnung besonders einfach ist.

Der durchschnittliche Retentatvolumenstrom kann beispielsweise dadurch berechnet werden, dass das ermittelte Volumen durch den Zeitraum bzw. Messzeitraum geteilt wird: ${Q}_{R} = \frac{{V}_{R}}{{t}_{M}}$ worin
V_{R} das ermittelte Retentatvolumen,
*t_{M}* der Zeitraum der Retentatvolumenermittlung (Messzeitraum) und
Q_{R} der durchschnittliche Retentatvolumenstrom ist.

Die durchschnittliche Permeabilität kann beispielsweise aus der folgenden Gleichung ermittelt werden: ${L}_{P} = \frac{{Q}_{R}}{{A}_{m} ⋅ Δ {p}_{TMP}}$ worin, ergänzend zur vorherigen Legende,
*L_{P}* die durchschnittliche Permeabilität,
*Aₘ* die Membranfläche und
Δ*p_{TMP}* der Transmembrandruck ist.

Der Transmembrandruck entspricht während des Rückspülbetriebs dem Rückspüldruck, der vereinfacht als konstant angenommen werden kann, da die Rohwasserseite zur Atmosphäre geöffnet ist. Er kann werksseitig oder bei der Inbetriebnahme, beispielsweise mittels eines Druckminderers auf einen bestimmten Wert, beispielsweise 4 bar eingestellt werden, der, wie die Membranfläche, in einer Anlagensteuerung hinterlegt sein kann, um die Permeabilität zu berechnen.

Die nachfolgenden Gleichungen beschreiben zum tieferen Verständnis die physikalischen Zusammenhänge für den laminaren konvektiven Stofftransport durch eine ideale semipermeable Membrane ohne Berücksichtigung von Abstoßungen, osmotischen Drücken, der komplexen Morphologie der Poren oder der Ausbildung einer sekundären Membran durch Fouling. Ein Integritätsfehler, d.h. größere Poren r und/oder eine geringere Membrandicke *δₘ*, erhöhen die Filtrationsgeschwindigkeit *v* und die Permeabilität L_{P} der Membran.
1) Hagen Poiseuille Gleichung für die Filtrationsgeschwindigkeit *v* durch die Membran: $v = \frac{{r}^{2} ⋅ Δ {p}_{TMP}}{8 ⋅ μ ⋅ {δ}_{m}}$ worin, ergänzend zur vorherigen Legende, *v* die Filtrationsgeschwindigkeit
   r: der Porenradius
   *µ*: die dynamische Viskosität des zu filternden Fluids und
   *δₘ*: die Membrandicke ist.
2) Hydraulische Permeabilität L_{P} der Membran nach Kedem-Katchalsky: ${L}_{P} = \frac{{J}_{V}}{Δ {p}_{TMP}} = \frac{ϵ ⋅ {r}^{2}}{8 ⋅ μ ⋅ {δ}_{m}}$ mit ${J}_{V} = ϵ ⋅ v$ worin, ergänzend zur vorherigen Legende,
   *J_{V}*: der volumetrische Filtratfluss,
   *ε*: die Porosität der Membran und
   *L_{P}* die Permeabilität ist.
3) Gleichungen zur Berechnung des Filtratflusses *J_{V}* durch die Membran und des Retentatvolumenstroms Q_{R} ${J}_{V} = \frac{{Q}_{R}}{{A}_{m}}$ ${Q}_{R} = \frac{{V}_{R}}{{t}_{M}}$ Somit gilt
   a) für das Retentatvolumen V_{R}: ${V}_{R} = {Q}_{R} ⋅ {t}_{M} = {J}_{V} ⋅ {A}_{m} ⋅ {t}_{M} = v ⋅ ϵ ⋅ {A}_{m} ⋅ {t}_{M} = \frac{{r}^{2} ⋅ Δ {p}_{TMP}}{8 ⋅ μ ⋅ {δ}_{m}} ⋅ ϵ ⋅ {A}_{m} ⋅ {t}_{M}$
   b) für den Retentatvolumenstrom Q_{R}: ${Q}_{R} = \frac{{V}_{R}}{{t}_{M}} = {A}_{m} ⋅ {J}_{V} = v ⋅ ϵ ⋅ {A}_{m} = \frac{{r}^{2} ⋅ Δ {p}_{TMP}}{8 ⋅ μ ⋅ {δ}_{m}} ⋅ ϵ ⋅ {A}_{m}$
   c) für die Permeabilität *L_{P}*: ${L}_{P} = \frac{{J}_{V}}{Δ {p}_{TMP}} = \frac{{Q}_{R}}{{A}_{m} ⋅ Δ {p}_{TMP}} = \frac{{V}_{R}}{{A}_{m} ⋅ {t}_{M} ⋅ Δ {p}_{TMP}} = \frac{ϵ ⋅ {r}^{2}}{8 ⋅ μ ⋅ {δ}_{m}}$

Gleichung b) zeigt, dass der durchschnittliche Volumenstrom bei der Rückspülung über das Retentatvolumen V_{R} und die Messzeit *t_{M}* ermittelt werden kann. Der Volumenstrom *Q_{R}* steigt mit sauber werdender Membran über die Rückspülzeit bei konstantem Rückspüldruck Δp_{TMP}. Der durchschnittliche Wert liegt damit immer unterhalb des Erwartungswertes einer sauberen Membran, die von sauberem Wasser durchflossen wird.

Gleichung c) zeigt, dass die durchschnittliche Permeabilität *L_{P}* bei der Rückspülung über die Membranfläche *Aₘ,* das Retentatvolumen V_{R} die Messzeit *t_{M}* und den Transmembrandruck Δ*p_{TMP}* ermittelt werden kann. Die Permeabilität *L_{P}* steigt mit sauber werdender Membran über die Rückspülzeit bei konstantem Rückspüldruck Δp_{TMP}. Der durchschnittliche Wert liegt damit immer unterhalb des Erwartungswertes einer sauberen, von sauberem Wasser durchflossenen Membran.

Der Erwartungswert ist geeigneterweise ein empirisch ermittelter Wert. Im Falle des Retentatvolumens entspricht der Erwartungswert beispielsweise dem maximalen Volumen, das bei Rückspülung eines sauberen Filtermoduls mit sauberem Wasser bei einer Bezugstemperatur und einem definierten Rückspüldruck (Rückspülreferenzdruck) erreicht werden kann. Wird im Betrieb ein höheres Volumen als der Erwartungswert gemessen, so kann von einem Integritätsfehler ausgegangen werden. Wird anstelle des Volumens der Volumenstrom oder die Permeabilität für die Beurteilung der Integrität verwendet, kann der Erwartungswert ein Wert sein, der sich in entsprechender Weise unter Berücksichtigung der vorstehenden Bedingungen für den Volumenstrom und die Permeabilität ergibt.

Aus dem Vorgenannten wird deutlich, dass der Erwartungswert, genauer gesagt das beim Rückspülen zu erwartende Retentatvolumen, der beim Rückspülen zu erwartende durchschnittliche Retentatvolumenstrom und die beim bzw. am Ende des Rückspülens zu erwartende durchschnittliche Permeabilität, abhängig ist von gewissen Annahmen (Bezugswassertemperatur, Rückspülreferenzdruck). Da der Erwartungswert eine Entscheidungsschwelle ist und für die Durchführung des erfindungsgemäßen Verfahrens in einer Anlagensteuerung der Ultrafiltrationsanlage abgespeichert sein muss, liefert das Verfahren kein zuverlässiges Ergebnis, wenn die Annahmen in der Praxis nicht zutreffen.

In den zuvor genannten Gleichungen, welche den Zusammenhang der Porengröße r und Membrandicke *δₘ*mit dem Retentatvolumen *V_{R}*, Retentatvolumenstrom Q und der Permeabilität *L_{P}* beschreiben, sind der Rückspüldruck und die dynamische Viskosität Unsicherheiten bzw. Schwankungen über die gesamte Betriebszeit der Ultrafiltrationsanlage unterworfen. Beispielsweise kann der voreingestellte Rückspüldruck abnehmen oder schlichtweg anders sein, als ein werksseitig angenommener Rückspülreferenzdruck, z.B. infolge einer Fehlfunktion oder Fehleinstellung des Druckminderers, so dass der tatsächliche Transmembrandruck Δ*p_{TMP}* beim Rückspülen nicht dem Rückspülreferenzdruck entspricht, der bei der empirischen Bestimmung des Erwartungswerts vorlag bzw. angenommen wurde. Ferner ist die dynamische Viskosität des Fluids abhängig von seiner Temperatur, welche ebenfalls von der Temperatur abweichen kann, die bei der empirischen Bestimmung des Erwartungswerts vorlag.

Um eine Änderung oder Fehleinstellung des Rückspüldrucks zu berücksichtigen und somit die Genauigkeit der erfindungsgemäßen Integritätsprüfung zu verbessern, kann in einer Weiterbildung des erfindungsgemäßen Verfahrens das ermittelte Volumen oder der daraus berechnete Wert ein durch Normierung auf den Rückspülreferenzdruck erhaltener Korrekturwert sein, wobei der Rückspüldruck auf der Filtratseite gemessen und bei der Normierung verwendet wird. Der Korrekturwert kann also ein normierter Wert des Retentatvolumens, des Retentatvolumenstroms oder der Permeabilität sein. Der Rückspülreferenzdruck ist derjenige Rückspüldruck, der der (empirischen) Bestimmung des Erwartungswerts zugrunde lag.

Für das Retentatvolumen, den Retentatvolumenstrom oder die Permeabilität kann der Korrekturwert wie folgt berechnet werden: ${V}_{R _ corr} = {V}_{R} ⋅ \frac{Δ {p}_{TMP 0}}{Δ {p}_{TMP 1}}$ oder ${Q}_{R _ corr} = {Q}_{R} ⋅ \frac{Δ {p}_{TMP 0}}{Δ {p}_{TMP 1}}$ oder ${L}_{P _ corr} = {L}_{P} ⋅ \frac{Δ {p}_{TMP 1}}{Δ {p}_{TMP 0}} ,$ wobei
*V_{R}* das ermittelte, im Messzeitraum abgeschiedene Volumen des Retentats,
*Q_{R}* der berechnete Volumenstrom des Retentats,
*L_{P}* die berechnete Permeabilität,
*V_{R_corr}* der Korrekturwert für das Volumen,
*Q_{R_corr}* der Korrekturwert für den Volumenstrom,
*L_{P_corr}* der Korrekturwert für die Permeabilität,
Δ*p*_{*TMP* 0} ein bei der Bestimmung des Erwartungswerts verwendeter Transmembrandruck und
Δ*p*_{*TMP* 1} ein gemessener, aktueller Transmembrandruck ist.

Da der Druck auf der Retentatseite beim Rückspülen dem Atmosphärendruck entspricht, ist der jeweilige Transmembrandruck Δ*p*_{*TMP* 0}*,* Δ*p*_{*TMP* 1} gleich dem auf der Filtratseite gemessenen Rückspüldruck P_{SP} bzw. bei der Bestimmung des Erwartungswerts verwendeten Rückspüldruck P_{SP0} (Rückspülreferenzdruck): ${V}_{R _ corr} = {V}_{R} ⋅ \frac{{P}_{SP 0}}{{P}_{SP}}$ oder ${Q}_{R _ corr} = {Q}_{R} ⋅ \frac{{P}_{SP 0}}{{P}_{SP}}$ oder ${L}_{P _ corr} = {L}_{P} ⋅ \frac{{P}_{SP}}{{P}_{SP 0}}$

Somit ergibt sich der Korrekturwert für das Volumen oder den Volumenstrom durch dessen Multiplikation mit dem Verhältnis (Druckquotient) aus dem bei der Bestimmung des Erwartungswerts verwendeten Rückspüldrucks (Rückspülreferenzdruck) zu dem auf der Filtratseite gemessenen Rückspüldruck und der Korrekturwert für die Permeabilität durch deren Multiplikation mit dem Verhältnis (Druckquotient) aus dem auf der Filtratseite gemessenen Rückspüldruck zu dem bei der Bestimmung des Erwartungswerts verwendeten Rückspüldruck. Der bei der Bestimmung des Erwartungswerts verwendete Rückspüldruck bzw. Rückspülreferenzdruck kann beispielsweise 1 bar betragen.

Wie bereits angesprochen, stellt auch die Temperatur eine auf den Erwartungswert Einfluss nehmende Größe dar, da die dynamische Viskosität des Fluids von ihr abhängt. Die Berücksichtigung dieses Zusammenhangs kann dadurch erfolgen, dass der aus dem Volumen berechnete Wert ein Korrekturwert ist, wobei die Temperatur des Retentats bestimmt und bei der Berechnung des Korrekturwerts verwendet wird. Genauer gesagt, kann aus der Temperatur des Retentats ein temperaturabhängiger Korrekturfaktor berechnet und das Volumen oder die daraus berechnete Größe Volumenstrom oder Permeabilität mit diesem Korrekturfaktor multipliziert werden, um den Korrekturwert zu erhalten. Dies wird durch folgende Gleichungen verdeutlicht: ${V}_{R _ corr} = {V}_{R} ⋅ \frac{{μ}_{1}}{{μ}_{0}} = {V}_{R} ⋅ {K}_{T}$ oder ${Q}_{R _ corr} = {Q}_{R} ⋅ \frac{{μ}_{1}}{{μ}_{0}} = {Q}_{R} ⋅ {K}_{T}$ oder ${L}_{P _ corr} = {L}_{P} ⋅ \frac{{μ}_{1}}{{μ}_{0}} = {L}_{P} ⋅ {K}_{T} ,$ wobei, in Ergänzung der vorherigen Legende
*µ*₁ die aktuelle dynamische Viskosität des Fluids,
*µ*₀ die dynamische Viskosität des Fluids bei der Bestimmung des Erwartungswerts und
*K_{T}* der Korrekturfaktor ist.

Der Korrekturfaktor *K_{T}* beschreibt den Zusammenhang zwischen der Temperatur T und der dynamischen Viskosität µ, bzw. wie sich diese mit der Temperatur ändert. Beispielsweise kann der Korrekturfaktor *K_{T}* ausgedrückt werden durch die Formel: ${K}_{T} = {e}^{- 0 , 0239 \times \left({T}_{R}-{T}_{o}\right)}$ in der T_{R} die gemessene, aktuelle Temperatur des Retentats und T₀ eine Bezugstemperatur ist, die der Bestimmung des Erwartungswerts zugrunde liegt bzw. lag. Diese Bezugstemperatur kann z.B. T₀ = 15°C sein.

Es ist auch möglich bei allen oben dargestellten Formeln, anstatt der dynamischen Viskosität µ, die kinematische Viskosität ϑ zu nutzen. Der Zusammenhang zwischen beiden Größen ist wie folgt: $ϑ = \frac{μ}{ρ}$ worin:
µ die dynamischen Viskosität,
*ϑ* die kinematische Viskosität und
*ρ* die Dichte ist.

Dabei muss dann zusätzlich die Dichte hinsichtlich der Bezugstemperatur normiert werden. Für den Zusammenhang Dichte *ρ* und Temperatur T_{R} kann folgende Formel verwendet werden: $ρ \left({T}_{R}\right) = {ρ}_{B} ⋅ \left(1-β⋅\left({T}_{R}-{T}_{B}\right)\right)$ mit $β = 0 , 00031 ⋅ \left(0,23+0,83⋅{\left(\frac{{T}_{R}}{{T}_{B}}\right)}^{0 , 06}\right)$ worin, in Ergänzung der vorhergehenden Legende,
*ρ* (*T_{R}*) die Dichte bei der gemessenen Temperatur T_{R},
${ρ}_{B} \left({T}_{B}\right) = 999 , 6 \frac{kg}{{m}^{3}}$ die Dichte bei der Basistemperatur T_{B} = 10°C ist.

Bei einer Bezugstemperatur von T₀ = 15°C ist die Dichte ρ₀ = 999,0 kg/m³ ${V}_{R _ corr} = {V}_{R} ⋅ \frac{{ϑ}_{1}}{{ϑ}_{0}} = {V}_{R} ⋅ {K}_{T} ⋅ {K}_{ρ}$ mit ${K}_{ρ} = \frac{{ρ}_{0}}{{ρ}_{1}} = \frac{999 \frac{kg}{{m}^{3}}}{999 , 6 \frac{kg}{{m}^{3}} ⋅ \left(1-0,00031⋅\left(0,23+0,83⋅{\left(\frac{{T}_{R}}{10 ° C}\right)}^{0 , 06}\right)⋅\left({T}_{R}-10°C\right)\right)}$

Selbiges gilt für den Volumenstrom Q_{R} und die Permeabilität L_{P} analog zu den obigen Formeln.

Die vorstehend genannte Normierung auf den Rückspülreferenzdruck und die Korrektur bezüglich der Temperatur können auch kumulativ erfolgen, indem das ermittelte Volumen, der daraus berechnete Volumenstrom oder die Permeabilität sowohl mit dem o.g. Druckquotienten P_{SP}/P_{SP0} bzw. P_{SP0}/P_{SP} als auch mit dem oder den Korrekturfaktor(en) K_{T}, K_{ρ} multipliziert wird, bevor der Vergleich mit dem entsprechenden Erwartungswert erfolgt.

Vorteilhafterweise kann eine Warnmeldung ausgegeben werden, wenn der Erwartungswert überschritten wird. Dies kann durch ein akustisches, optisches, oder ein elektronisches Warnsignal erfolgen. Gegebenenfalls kann auch eine elektronische Nachricht verschickt (SMS, E-Mail) werden.

Die Erfindung betrifft außerdem eine Ultrafiltrationsanlage zur Trinkwasseraufbereitung umfassend wenigstens ein Filtermodul mit einer Ultrafiltrationsmembran, einen Rohwasserzulauf und einen Filtratablauf, zwischen denen das Filtermodul liegt, wobei zur Reinigung der Membran in einem Rückspülbetrieb Filtrat zu einer Filtratseite des Filtermoduls leitbar ist und eine Rohwasserseite des Filtermoduls über eine Retentatleitung mit einem Ablauf zur Abscheidung von Retentat verbindbar ist. Die Ultrafiltrationsanlage umfasst ferner eine Überwachungseinheit zur Überwachung der Integrität der Ultrafiltrationsmembran während des Rückspülbetriebs, die eingerichtet ist, das vorstehend erläuterte Verfahren auszuführen.

Die Überwachungseinheit kann eine SPS (Speicherprogrammierbare Steuerung) oder ein Mikrocomputer sein.

Das Filtermodul kann ein, zwei oder mehr Filtermembranen, vorzugsweise eine Vielzahl Hohlfasermembranen aufweisen. Außerdem kann die Ultrafiltrationsanlage ein, zwei oder mehr parallele Filtermodule aufweisen, von denen ein oder mehr Filtermodul Filtrat erzeugen, das unmittelbar zu einem oder mehr anderen Filtermodulen geleitet wird. Somit kann eine Rückspülung eines oder mehrerer Filtermodule erfolgen, während andere Filtermodule weiterhin gefiltertes Trinkwasser liefern. Vorzugsweise sind die Filtermodule zu Gruppen zusammengeschaltet. So können beispielsweise zwei, drei oder mehr Gruppen zu je zwei, drei oder mehr parallelen Filtermodulen parallel liegen. Der Rohwasserzulauf der Anlage ist gleichzeitig der Rohwasserzulauf der Gruppen bzw. der Filtermodule. Ferner ist der Filtratablauf der Anlage gleichzeitig der Filtratablauf der Gruppen bzw. der Filtermodule. Somit liegen die Filtermembranen, Filtermodule oder Gruppen stets zwischen dem Rohwasserzulauf und dem Filtratablauf.

Weitere Merkmale, Vorteile, Eigenschaften und Wirkungen der Erfindung werden nachfolgend anhand von Ausführungsbeispielen und der beigefügten Figuren erläutert. Identische oder äquivalente, insbesondere funktionsgleiche Elemente haben in den Figuren dasselbe Bezugszeichen. Die Bezugszeichen behalten von einer Figur zur anderen ihre Gültigkeit.

Es sei darauf hingewiesen, dass im Rahmen der vorliegenden Beschreibung die Begriffe "aufweisen", "umfassen" oder "beinhalten" keinesfalls das Vorhandensein weiterer Merkmale ausschließen. Ferner schließt die Verwendung des unbestimmten Artikels bei einem Gegenstand nicht dessen Plural aus.

Es zeigen:
- Figur 1:: eine erfindungsgemäße Ultrafiltrationsanlage
- Figur 2:: einen Ablauf einer ersten Ausführungsvariante des Verfahrens
- Figur 3:: einen Ablauf einer zweiten Ausführungsvariante des Verfahrens mit temperaturbedingter Volumenkorrektur
- Figur 4:: einen Ablauf einer dritten Ausführungsvariante des Verfahrens mit Volumenkorrektur und Normierung

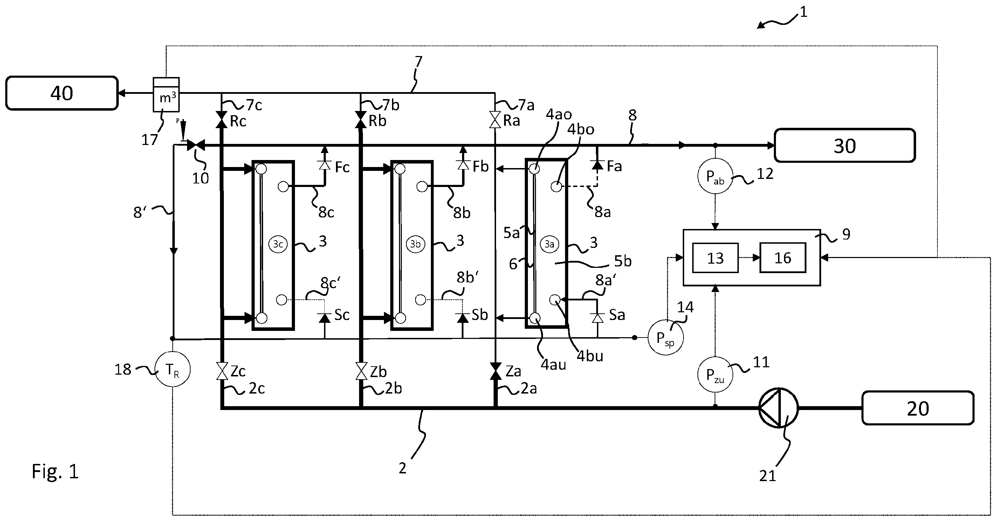

Figur 1 zeigt eine Ultrafiltrationsanlage 1 zur Trinkwasseraufbereitung unter Verwendung von drei parallelen Ultrafiltrationsmodulen 3a, 3b, 3c. In einer anderen Variante kann auch nur ein Ultrafiltrationsmodul, oder können zwei oder mehr als drei parallele Ultrafiltrationsmodule vorhanden sein. Des Weiteren kann jedes dieser Ultrafiltrationsmodule 3a, 3b, 3c stellvertretend für eine Gruppe stehen, die aus zwei oder mehr parallelen Ultrafiltrationsmodulen gebildet ist. Jede Gruppe kann als Ultrafiltrationseinheit verstanden werden. Um ein identisches Filtrations- und Rückspülverhalten zu erreichen, besitzen alle Ultrafiltrationseinheiten bevorzugt dieselbe Anzahl an Ultrafiltrationsmodulen 3a, 3b, 3c. Die Ultrafiltrationsmodule derselben Ultrafiltrationseinheit können baulich in einer gemeinsamen Halterung, auch Rack genannt, zusammengefasst sein. Je nach Filtratbedarf bzw. gleichzeitig zu versorgender Verbraucher, kann die Ultrafiltrationsanlage 1 in einer Ausführungsvariante zwei, drei oder mehr Ultrafiltrationseinheiten bzw. Racks besitzen, die hydraulisch zueinander parallel verschaltet sind. Sinnvollerweise sind alle Ultrafiltrationsmodule 3a, 3b, 3c baugleich.

Die Ultrafiltrationsanlage 1 wird aus einer Quelle 20 mit Rohwasser gespeist. Diese Quelle 20 kann ein lokaler Wasserversorger oder ein lokales Wasserreservoir wie z.B. ein Tank oder eine Zisterne sein. Eine zentrale Versorgungsleitung 2, die hier den Rohwasserzulauf bildet, verbindet die Ultrafiltrationsmodule 3a, 3b, 3c mit der Quelle 20, wobei in der Versorgungsleitung 2 eine Druckerhöhungsanlage 21 angeordnet ist, um einen Eingangsdruck P_{zu} von beispielsweise 10 bar an der Eingangsseite der Ultrafiltrationsanlage 1 bereitzustellen. Letzteres ist vor allem bei hohen Gebäuden und/ oder sich weit erstreckenden Trinkwasserverteilnetzen innerhalb des Gebäudes notwendig, da selbst der von einem etwaigen Versorger bereitgestellte Versorgungsdruck allein nicht ausreicht, um einen ausreichenden Fließdruck, z.B. 2 bar, an den höchstgelegenen oder entferntesten Entnahmestellen bzw. Verbrauchern zu gewährleisten. Die Druckerhöhungsanlage ist hier lediglich durch eine Pumpe 21 symbolisiert.

Von der zentralen Versorgungsleitung 2 geht zu jedem der Ultrafiltrationsmodule 3a, 3b, 3c eine lokale Versorgungsleitung 2a, 2b, 2c ab, in der jeweils ein Zulaufventil Za, Zb, Zc liegt. Die lokalen Versorgungsleitungen 2a, 2b, 2c enden jeweils an Zulaufanschlüssen 4au, 4ao, die in eine Rohwasserseite 5a des entsprechenden Ultrafiltrationsmoduls 3a, 3b, 3c münden. Anstelle der zwei Zulaufanschlüssen 4au, 4ao kann in einer anderen Ausführungsvariante auch nur ein Zulaufanschluss vorhanden sein. Die Rohwasserseite 5a ist die durch zumindest eine Ultrafiltrationsmembran 6 von der Filtratseite 5b getrennt, aus der ein Ablaufanschluss 4bo herausführt. Über eine jeweilige lokale Filtratleitung 8a, 8b, 8c sind die Ultrafiltrationsmodule 3a, 3b, 3c ausgehend vom Ablaufanschluss 4bo mit einer zentralen Filtratleitung 8 verbunden, die zu den Verbrauchern 40 führt. Die Filtratleitung 8 bildet hier somit einen Filtratablauf. Verbraucher 40 können beispielsweise Waschtischarmaturen, Toiletten, Duschen, Wannen etc. sein.

Im Filtrationsbetrieb erzeugen die Ultrafiltrationsmodule 3a, 3b, 3c aus dem Rohwasser Filtrat, indem das Rohwasser durch die Membran 6 hindurchtritt und Partikel im Rohwasser auf der Rohwasserseite 5a bzw. an der Membran 6 haftend verbleiben. Das zur Filtratseite 5b permeierte Wasser bzw. Filtrat wird durch die lokalen Filtratleitungen 8a, 8b, 8c zur zentralen Filtratleitung 8 geleitet, welche das Filtrat weiter zu den Verbrauchern 40 leitet.

Um an der Oberfläche der Membran 6 haftende Partikel zu lösen, kann jedes Ultrafiltrationsmodul 3a, 3b, 3c unabhängig von den anderen Ultrafiltrationsmodulen 3a, 3b, 3c in einem Rückspülbetrieb betrieben werden, in dem die Filtermembran 6 rückwärts durchströmt wird, d.h. von der Filtratseite 5b zur Rohwasserseite 5a. Das hierfür verwendete Filtrat stammt von wenigstens einem der anderen Ultrafiltrationsmodulen 3a, 3b, 3c. Um das durch die Membran 6 hindurchtretende Wasser im Rückspülbetrieb von der Rohwasserseite 5a abzuführen, ist die Rohwasserseite 5a eines jeden Ultrafiltrationsmoduls 3a, 3b, 3c über eine lokale Retentatleitung 7a, 7b, 7c, in der sich jeweils ein Retentatventil Ra, Rb, Rc befindet, mit einer zentralen Retentatleitung 7 verbunden, die zu einem freien Ablauf 40 führt, an dem das Retentat abgeschieden wird.

Die Festlegung, welches Ultrafiltrationsmodul zu einem Zeitpunkt filtern soll und welches durch Rückspülung gereinigt werden soll, erfolgt durch eine Einstellung der Zulaufventile Za, Zb, Zc und der Retentatventile Ra, Rb, Rc, wobei diese Ventile bezogen auf jedes Ultrafiltrationsmodul 3a, 3b, 3c invertiert angesteuert werden. Das bedeutet, dass das einem Ultrafiltrationsmodul 3a, 3b, 3c zugeordnete Zulaufventil Za, Zb, Zc geöffnet ist, während das ihm zugeordnete Retentatventil Ra, Rb, Rc geschlossen ist, und umgekehrt. Gemäß der in Figur 1 gezeigten Momentaufnahme der Betriebszustände liefern zwei erste Ultrafiltrationsmodule 3b, 3c Filtrat, während ein zweites Ultrafiltrationsmodul 3a (rechts) aktuell rückgespült wird, wobei das Filtrat für die Verbraucher 40 einerseits aber auch für die Rückspülung des zweiten Ultrafiltrationsmoduls 3a andererseits verwendet wird. Die beiden ersten Ultrafiltrationsmodule 3b, 3c befinden sich also im Filtrationsbetrieb, während sich das zweite Ultrafiltrationsmodul 3a im Rückspülbetrieb befindet. Die Pfeile an den diversen Leitungen und innerhalb der Ultrafiltrationsmodule 3a, 3b, 3c geben die jeweilige Strömungsrichtung an. Die Ventilstellungen sind somit wie folgt:

| Filtrationsmodul | Betrieb | Ventil | Stellung |
|---|---|---|---|
| 3a | Rückspülen | Za | Zu |
| | | Ra | Auf |
| 3b | Filtern | Zb | Auf |
| | | Rb | Zu |
| 3c | Filtern | Zc | Auf |
| | | Rc | Zu |

Wie in Figur 1 zu erkennen ist und nachfolgend als Konvention verwendet wird, kennzeichnen gefüllte Ventilsymbole geschlossene Ventile und unausgefüllte Ventilsymbole geöffnete Ventile.

Der Vorteil einer derartigen Ultrafiltrationsanlage 1 besteht darin, dass ein Rückspülen der einzelnen Ultrafiltrationsmodule3a, 3b, 3c im Betrieb der Ultrafiltrationsanlage 1 erfolgen kann, d.h. während Filtrat an die Verbraucher 20 geliefert wird, so dass diese keine oder zumindest keine Wesentliche Beeinträchtigung erfahren. Es kommt also nicht zu einem Stillstand bzw. zu keiner Unterbrechung der Filtratlieferung an die Verbraucher 20. Ferner kommt die erfindungsgemäße Ultrafiltrationsanlage 1 ohne einen Rückspülbehälter und ohne eine Rückspülpumpe aus, wodurch der Aufwand und die Kosten zu deren Herstellung reduziert werden.

Eine Besonderheit der erfindungsgemäßen Ultrafiltrationsanlage in Figur 1 besteht darin, dass jedes Ultrafiltrationsmodul 3a, 3b, 3c nicht nur über die lokale Filtratleitung 8a, 8b, 8c, sondern zusätzlich über eine hierzu parallele zweite Leitung 8', 8a', 8b', 8c' mit der zentralen Filtratleitung 8 verbunden ist. Dabei bestehen die zweiten Leitungen jeweils aus einem modulbezogenen, ersten Abschnitt 8a', 8b', 8c', die sich zu einem gemeinsamen zweiten Abschnitt 8' vereinigen, welcher dann in die zentrale Filtratleitung 8 mündet. Anders betrachtet, sind die zweiten Leitungen 8', 8a', 8b', 8c' aus diesem, mit der Filtratleitung 8 verbundenen gemeinsamen Abschnitt 8' und davon zu den einzelnen Ultrafiltrationsmodulen 3a, 3b, 3c abgehenden Einzelleitungen 8a', 8b', 8c' gebildet. Während die lokalen Filtratleitungen 8a, 8b, 8c zur Filtratableitung im Filtrationsbetrieb dienen, sind die zweiten Leitungen 8', 8a', 8b', 8c' für eine Filtratzuleitung im Rückspülbetrieb vorgesehen. So kann beispielsweise Filtrat von zweien der Ultrafiltrationsmodulen 3b, 3c über die entsprechende zweite Leitung 8', 8a' der Filtratseite 5b dem dritten Ultrafiltrationsmodul 3a zugeführt werden. Dies erfolgt, indem das Zulaufventil Za zum dritten Ultrafiltrationsmoduls 3a geschlossen und das dem dritten Ultrafiltrationsmodul 3a zugeordnete Retentatventil Ra geöffnet wird. Die Zuführung des Filtrats zum dritten Ultrafiltrationsmoduls 3a erfolgt über einen weiteren Anschluss 4bu auf der Filtratseite 5b.

Um den Druck über einem rückzuspülenden Ultrafiltrationsmodul 3a, 3b, 3c zu begrenzen und damit die entsprechende Membran 6 zu schützen, ist in dem gemeinsamen Abschnitt 8' der zweiten Leitungen 8', 8a', 8b', 8c' ein Druckreduzierelement, insbesondere ein Druckminderer 10 angeordnet.

Bei dieser Anordnung ist es erforderlich, in den Einzelleitungen 8a', 8b', 8c' jeweils ein Spülventil Sa, Sb, Sc vorzusehen, um die druckungeminderte Filtratseite 5b der Filtrat liefernden Ultrafiltrationsmodule 3b, 3c von der Filtratseite 5b des rückzuspülenden Ultrafiltrationsmoduls 3a zu trennen, da das Druckreduzierelement 10 anderenfalls umgangen wird. Die Spülventile Sa, Sb, Sc können identisch ausgeführt sein, wie die Zulaufventile Za, Zb, Zc, die Retentatventile Ra, Rb, Rc und/ oder die Filtratventile Fa, Fb, Fc. Bei der in Figur 1 dargestellten Ausführungsvariante sind die Spülventile Sa, Sb, Sc durch Rückflussverhinderer gebildet. Diese sind in den Einzelleitungen 8a', 8b', 8c' so angeordnet, dass ihre jeweilige Eingangsseite mit dem gemeinsamen Abschnitt 8' und ihre jeweilige Ausgangsseite mit dem entsprechenden Ultrafiltrationsmodul 3a, 3b, 3c verbunden ist.

Die Zulaufventile Za, Zb, Zc und/ oder Retentatventile Ra, Rb, Rc können in einer Ausführungsvariante gesteuerte, insbesondere schaltbare (auf/ zu) oder einstellbare (0...100%) Stellventile sein, die beispielsweise elektrisch, elektromagnetisch oder pneumatisch betätigt werden. Beispielsweise sind die Stellventile ansteuerbare Motorventile.

Erfindungsgemäß sind die Filtratventile Fa, Fb, Fc durch Rückflussverhinderer gebildet sind. Dies hat den Vorteil, dass keine aktive Ansteuerung der Filtratventile Fa, Fb, Fc erforderlich ist. Diese Ausführung nutzt außerdem den Umstand aus, dass die lokalen Filtratleitungen 8a, 8b, 8c und die zweiten Leitungen 8a', 8b', 8c' jeweils nur in einer Richtung durchströmt werden bzw. werden dürfen und zwar je nach Betriebsfall "Filtern" oder "Rückspülen" alternativ. Da die Rückflussverhinderer Fa, Fb, Fc aufgrund ihrer Richtungsgebundenheit den Fluss nur in eine Richtung zu lassen, sind sie für die erfindungsgemäße Ultrafiltrationsanlage 1 besondere geeignet. Dabei sind sie derart in den lokalen Filtratleitungen 8a, 8b, 8c angeordnet, dass ihre Eingangsseite mit dem entsprechenden Ultrafiltrationsmodul 3a, 3b, 3c und ihre Ausgangsseite mit der zentralen Filtratleitung 8 verbunden sind.

Liegt der an den Rückflussverhinderern Fa, Fb, Fc von der Eingangsseite zur Ausgangsseite anliegende Druck über einem gewissen Öffnungsdruck p_{RFV}, öffnet der entsprechende Rückflussverhinderer Fa, Fb, Fc unabhängig vom Volumenstrom. Dieser Öffnungsdruck p_{RFV} liegt auch für minimalste Volumenströme z.B. bei ca. 0,3 bar. Aus dieser, in Fachkreisen als nachteilig empfundenen Eigenschaft, erwächst im Rahmen der vorliegenden Erfindung der Vorteil, dass die Rückflussverhinderer Fa, Fb, Fc als Strömungsindikatoren verwendet werden können. Während der Öffnungsdruck üblicher Rückflussverhinderer über der Messtoleranz einfacher und preiswerter Drucksensoren liegt und damit sicher erkannt werden kann, sind minimale Volumenströme nur mit speziellen, teuren Volumenstromsensoren messbar. Durch die Verwendung von Rückflussverhinderern Fa, Fb, Fc zwischen den Ultrafiltrationsmodulen 3a, 3b, 3c und der zentralen Filtratleitung 8 erübrigt sich jedoch die Notwendigkeit einer Volumenstromerfassung für eine Strömungsindikation. Vielmehr ermöglicht es die Druckdifferenz über der Reihenschaltung aus Ultrafiltrationsmodul 3a, 3b, 3c und zugehörigem Rückflussverhinderer Fa, Fb, Fc eine Aussage über ein Öffnen oder Nichtöffnen des Rückflussverhinderers Fa, Fb, Fc und damit auch eine Aussage über das Fließen oder Nichtfließen von Filtrat selbst bei kleinsten Volumenströmen zu erkennen. Dies wiederum eröffnet die Möglichkeit zu erkennen, ob und wenn die Ultrafiltrationsmembran 6 zerstört ist bzw. ihre Integrität verloren hat.

Die Dicke der Linien in Figur 1 symbolisiert den auf der entsprechenden wasserführenden Leitung befindlichen Druck, wobei der Druck umso größer ist, je dicker die Linie ist. Die gestrichelten Leitungen führen demgegenüber in dem dargestellten Betriebsfall kein Wasser, weil das entsprechende Ventil geschlossen ist.

Die Ultrafiltrationsmodule 3a, 3b, 3c sind in dieser Ausführungsvariante aus einem länglichen, im Wesentlichen zylindrischen Gehäuse gebildet. Sie besitzen jeweils eine Vielzahl Hohlfasermembranen 6 zwischen der Rohwasserseite 5a und der Filtratseite 5b, wobei in dieser Ausführungsvariante das Innere der Hohlfasermembranen zur Rohwasserseite 5a und der Raumbereich außerhalb der Hohlfasermembranen 6 zur Filtratseite 5b gehört. Jede der beiden Seiten 5a, 5b besitzt die bereits angesprochenen zwei Anschlüsse, die jeweils an gegenüberliegenden axialen Enden des Gehäuses angeordnet sind. In der bestimmungsgemäß senkrechten Anordnung der Ultrafiltrationsmodule 3a, 3b, 3c besitzt somit jedes Ultrafiltrationsmodul 3a, 3b, 3c einen unteren Zulaufanschluss 4au und einen oberen Zulaufanschluss 4ao jeweils zur Rohwasserseite 5a hin, sowie einen oberen Ablaufanschluss 4bo und einen unteren Zulaufanschluss 4bu jeweils zur Filtratseite 5b hin.

Die Ultrafiltrationsanlage 1 umfasst des Weiteren einen Eingangsdrucksensor 11 zur Messung des Eingangsdrucks P_{zu} in der Versorgungsleitung 2 sowie einen Ausgangsdrucksensor 12 zur Messung des Ausgangsdrucks P_{ab} in der zentralen Filtratleitung 8. Darüber hinaus ist ein weiterer Drucksensor 14 mit dem gemeinsamen Abschnitt 8' der zweiten Leitung 8', 8a, 8b, 8c verbunden, um den Rückspüldruck P_{SP} zu messen. In der zentralen Retentatleitung 7 ist ein Volumenzähler 17, umgangssprachlich auch Wasseruhr oder Wasserzähler genannt, angeordnet. Der Volumenzähler 17 gibt einen Impuls pro Volumeneinheit aus, die durch ihn hindurchfließt. Des Weiteren ist ein Temperatursensor 18 mit dem gemeinsamen Abschnitt 8' der zweiten Leitung 8', 8a, 8b, 8c verbunden, um die Temperatur T_{R} des rückzuspülenden Filtrats zu messen.

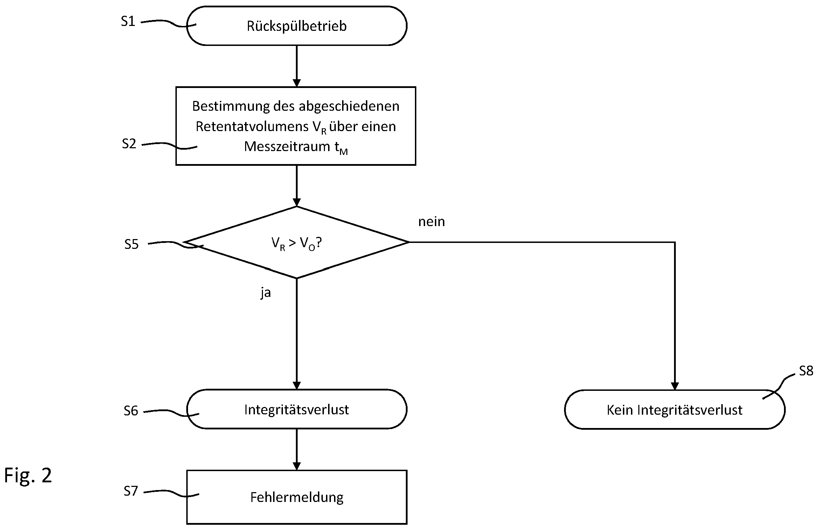

Die Messsignale dieser Drucksensoren 11, 12, 14, des Volumenzählers 17 und des Temperatursensors 18 sind einer Anlagensteuerung 9 zugeführt. Diese umfasst in Gestalt von Funktionseinheiten eine Auswerteeinheit 13 und eine Überwachungseinheit 16. Die Auswerteeinheit 13 berechnet aus den Impulsen des Volumenzählers 17 das Retentatvolumen V_{R}, das in einem Messzeitraum durch den Volumenzählers 17 hindurchgeflossen ist. Zusätzlich kann die Auswerteeinheit 13 eine Korrektur des ermittelten Retentatvolumens V_{R} anhand der gemessenen Temperatur T_{R} sowie eine Normierung des Retentatvolumens V_{R} auf den Rückspüldruck P_{SP} durchführen. Das Retentatvolumen V_{R} oder korrigierte und normierte Retentatvolumen V_{R_corr} wird anschließend der Überwachungseinheit 16 zugeführt, welche diesen daraufhin untersucht, ob die Membran 6 des rückgespülten Filtermoduls 3a einen Integritätsverlust erlitten hat. Dies wird anhand der Ablaufdiagramme in den Figuren 2 bis 4 veranschaulicht.

Figur 2 zeigt eine erste Ausführungsvariante des Verfahrens zur Prüfung der Membranintegrität. Das erfindungsgemäße Verfahren findet während des Rückspülbetriebs Anwendung. Es beginnt daher im Rückspülbetrieb, Schritt S1. Bei dem in Figur 1 gezeigten Beispiel wird aktuell das zweite Filtermodul 3a mit dem Filtrat der beiden ersten Filtermodule 3b, 3c rückgespült. Deren Filtrat fließt somit über die lokalen ersten Filtratleitungen 8b, 8c zur zentralen Filtratleitung 8, von dort über den Druckminderer 10 in den gemeinsamen Abschnitt 8' der zweiten Leitung 8', 8a, 8b, 8c und über die Einzelleitung 8a' und den Rückflussverhinderer Sa des zweiten Filtermoduls 3a in dessen Filtratseite 5b hinein. Dort strömt es durch die Membran 6 zur Rohwasserseite 5a, von wo es über die lokale Retentatleitung 7a und die zentrale Retentatleitung 7, das Retentatventil Ra und über den Volumenzähler 17 zum Ablauf 40 geleitet wird.

Der Messzeitraum tₘ, während dem die Impulse des Volumenzählers 17 gezählt werden, entspricht der Dauer der Rückspülung, welche mit beispielsweise 5 bis 10 Sekunden vergleichsweise kurz ist. Der Messzeitraum t_{M} ist somit ebenfalls bekannt und beträgt entsprechend diese 5s bis 10s. Mit dem Start des Rückspülbetriebs wird somit auch der Messzeitraum t_{M} gestartet und zeitgleich mit ihm beendet. Es werden dann die während des Messzeitraums tₘ auftretenden Impulse gezählt und deren Anzahl mit der Volumeneinheit multipliziert, für die der Volumenzähler 17 jeweils einen Impuls ausgibt, um das während des Messzeitraums t_{M} abgeschiedene Retentatvolumen V_{R} zu bestimmen. Dies erfolgt in Schritt S2 in der Auswerteeinheit 13.

Anschließend erfolgt in Schritt S5 in der Überwachungseinheit 16 eine Überprüfung, ob das bestimmte Retentatvolumen V_{R} größer als ein bestimmter Erwartungswert V₀ ist. Ist dies der Fall, liegt ein Integritätsverlust in dem rückgespülten Filtermodul 3a vor, Schritt S6, und es wird eine Fehlermeldung ausgegeben, Schritt S7. Ist das bestimmte Retentatvolumen V_{R} nicht größer als der Erwartungswert V₀, ist dagegen alles in Ordnung und die Filtermembran 6 intakt.

Der Erwartungswert V₀ kann hier so gewählt sein, dass er einem Maximalvolumen entspricht, das bei intakter und vollständig sauberer Membran 6 bei dem durch den Druckminderer 10 festgelegten Rückspüldruck während des Messzeitraums t_{M} durch die zentrale Retentatleitung 7 bei klarem Wasser (Trübheit < 0,2 NTU und Silt Density Index SDI < 1) fließt. Somit ist das bestimmte Retentatvolumen V_{R} bei intakter Membran 6 stets unterhalb dem Erwartungswert V₀. Liegt jedoch ein Integritätsfehler vor, d.h. dass die Filtermembran 6 bzw. wenigstens eine der Filtermembranen 6 in dem Filtermodul 3a geplatzt ist, strömt ein weitaus größeres Volumen während des Messzeitraums t_{M} durch das Filtermodul 3a respektive den Wasserzähler 17.

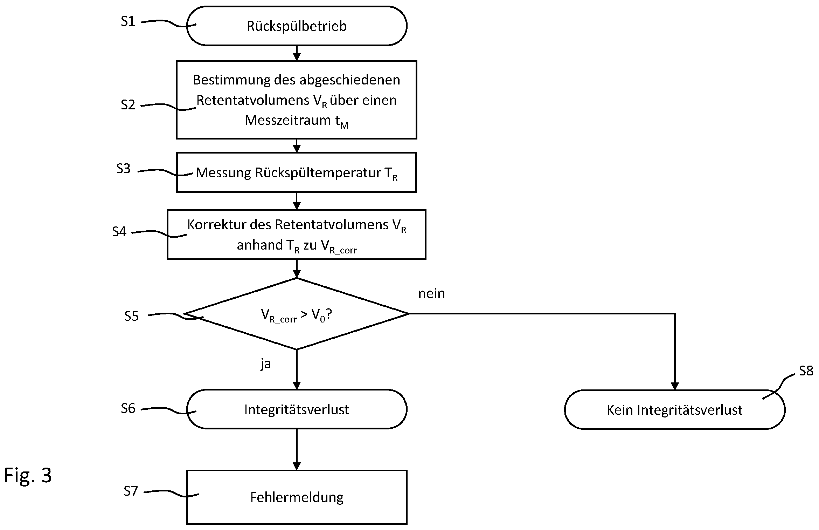

Figur 3 zeigt eine zweite Ausführungsvariante des Verfahrens zur Prüfung der Membranintegrität. Sie unterscheidet sich von der ersten Variante lediglich in den zusätzlichen Schritten S3 und S4. In Schritt S3 wird mit Hilfe des Temperatursensors 18 die Temperatur T_{R} des zum Rückspülen dienenden Filtrats gemessen und in Schritt S4 zur Korrektur des ermittelten Retentatvolumens V_{R} verwendet. Dies erfolgt gemäß der Formel: ${V}_{R _ corr} = {V}_{R} ⋅ {K}_{T} = {V}_{R} ⋅ {e}^{- 0 , 0239 \times \left({T}_{R}-15°C\right)}$ wobei V_{R} das ermittelte Retentatvolumen, V_{R_corr} der korrigierte Wert des Retentatvolumens, K_{T} ein auf die Bezugstemperatur von T₀ = 15°C bezogener Korrekturfaktor und T_{R} die gemessene Rückspültemperatur, d.h. die Temperatur des Retentats ist.

Durch die temperaturabhängige Korrektur des ermittelten Retentatvolumen V_{R} wird ein Fehler in der Volumenbestimmung korrigiert, der auf der Annahme einer konstanten, durchschnittlichen Temperatur von 15°C bzw. Viskosität des Wassers beruht. Da jedoch ein komplexer Zusammenhang zwischen der Viskosität und der Temperatur des Wassers besteht, kann eine erhebliche Abweichung der tatsächlichen Temperatur von der angenommenen Bezugstemperatur von 15°C zu einem erheblichen Fehler führen. Bei der ersten Ausführungsvariante kann diese Unsicherheit durch eine entsprechende Wahl des Erwartungswert V₀ berücksichtigt werden, beispielsweise indem dieser auf eine Temperatur des Rohwassers bezogen wird, die am Aufstellungsort der Ultrafiltrationsanlage zu erwarten ist, wie z.B. 25°C, so dass die Temperaturkorrektur nicht zwingend erforderlich ist. Sie verbessert jedoch die Fehlersicherheit und Erkennungsgenauigkeit eines Integritätsverlusts, da in dem vorgenannten Beispiel Integritätsfehler bei niedrigen Temperaturen nicht mehr gefunden werden.

In Schritt S5 wird das der Korrekturwert V_{R_corr} mit dem Erwartungswert V₀ verglichen.

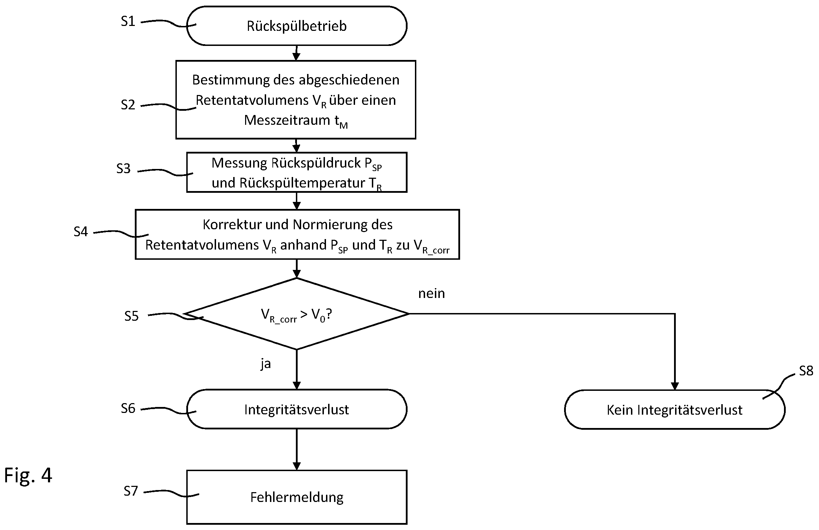

Figur 4 zeigt eine dritte Ausführungsvariante des Verfahrens zur Prüfung der Membranintegrität. Sie unterscheidet sich von der zweiten Variante lediglich darin, dass in Schritt S3 mit Hilfe des Drucksensors 14 zusätzlich der Rückspüldruck P_{SP} gemessen und in Schritt S4 zur Normierung des Retentatvolumens V_{R} verwendet wird. Der aus der temperaturabhängigen Korrektur und Normierung resultierende Korrekturwert berechnet sich gemäß der Formel: ${V}_{{R}_{corr}} = {V}_{R} ⋅ {K}_{T} ⋅ \frac{1 bar}{{P}_{SP}} = {V}_{R} ⋅ {e}^{- 0 , 0239 \times \left(T-15°C\right)} ⋅ \frac{1 bar}{{P}_{SP}}$ in der der eingestellte, der Bestimmung des Erwartungswerts V₀ zugrunde liegende Rückspüldruck P_{SP0} 1 bar und P_{SP} der gemessene Rückspüldruck ist. Diese Normierung trägt dem Umstand Rechnung, dass der werksseitig angenommene und über den Druckminderer eingestellte Rückspüldruck, kundenseitig gegebenenfalls geändert werden oder mit der Zeit driften kann. Denn in diesem Fall wäre der Vergleich in Schritt S5 nicht sachgerecht, weil der Erwartungswert V₀ auf den Rückspülreferenzdruck P_{SP0} bezogen ist. Durch die Normierung wird das Risiko einer fehlerhaften Integritätsverlusterkennung infolge kundenseitiger oder driftbedingter Änderung des Rückspüldrucks P_{SP} vermieden.

Bei Berücksichtigung der temperaturabhängigen Dichteänderung bei Rechnung über die kinematische Viskosität kann das gemessenen Retentatvolumen V_{R} für die Temperatur 15°C folgend korrigiert werden: $\begin{matrix}{V}_{R _ corr} = {V}_{R} ⋅ {K}_{T} ⋅ \frac{1 bar}{{p}_{SP}} ⋅ {K}_{ρ} \\ = {V}_{R} ⋅ {e}^{- 0 , 0239 \times \left(T-15°C\right)} ⋅ \frac{1 bar}{{p}_{SP}} \\ ⋅ \frac{999 kg / {m}^{3}}{999 , 6 kg / {m}^{3} ⋅ \left(1-0,00031⋅\left(0,23+0,83⋅{\left(\frac{T}{10 ° C}\right)}^{0 , 06}\right)⋅\left(T-10°C\right)\right)}\end{matrix}$

Es sei darauf hingewiesen, dass die vorstehende Beschreibung lediglich beispielhaft zum Zwecke der Veranschaulichung gegeben ist und den Schutzbereich der Erfindung keineswegs einschränkt. Merkmale der Erfindung, die als "kann", "beispielhaft", "bevorzugt", "optional", "ideal", "vorteilhaft", "gegebenenfalls" oder "geeignet" angegeben sind, sind als rein fakultativ zu betrachten und schränken ebenfalls den Schutzbereich nicht ein, welcher ausschließlich durch die Ansprüche festgelegt ist. Soweit in der vorstehenden Beschreibung Elemente, Komponenten, Verfahrensschritte, Werte oder Informationen genannt sind, die bekannte, naheliegende oder vorhersehbare Äquivalente besitzen, werden diese Äquivalente von der Erfindung mit umfasst. Ebenso schließt die Erfindung jegliche Änderungen, Abwandlungen oder Modifikationen von Ausführungsbeispielen ein, die den Austausch, die Hinzunahme, die Änderung oder das Weglassen von Elementen, Komponenten, Verfahrensschritte, Werten oder Informationen zum Gegenstand haben, solange der erfindungsgemäße Grundgedanke erhalten bleibt, ungeachtet dessen, ob die Änderung, Abwandlung oder Modifikationen zu einer Verbesserung oder Verschlechterung einer Ausführungsform führt.

Obgleich die vorstehende Erfindungsbeschreibung eine Vielzahl körperlicher, unkörperlicher oder verfahrensgegenständlicher Merkmale in Bezug zu einem oder mehreren konkreten Ausführungsbeispiel(en) nennt, so können diese Merkmale auch isoliert von dem konkreten Ausführungsbeispiel verwendet werden, jedenfalls soweit sie nicht das zwingende Vorhandensein weiterer Merkmale erfordern. Umgekehrt können diese in Bezug zu einem oder mehreren konkreten Ausführungsbeispiel(en) genannten Merkmale beliebig miteinander sowie mit weiteren offenbarten oder nicht offenbarten Merkmalen von gezeigten oder nicht gezeigten Ausführungsbeispielen kombiniert werden, jedenfalls soweit sich die Merkmale nicht gegenseitig ausschließen oder zu technischen Unvereinbarkeiten führen.

### Bezugszeichenliste

1 Ultrafiltrationsanlage
2 Rohrwasserzulauf, zentrale Versorgungsleitung
2a, 2b, 2c lokale Versorgungsleitung
3 Ultrafiltrationseinheit
3a, 3b, 3c Ultrafiltrationsmodul
4ao oberer Zulaufanschluss
4au unterer Zulaufanschluss
4bo oberer Ablaufanschluss
4bu unterer Zulaufanschluss
5a Rohwasserseite
5b Filtratseite
6 Filtrationsmembran
7 zentrale Retentatleitung
7a, 7b, 7c lokale Retentatleitungen
8 Filtratablauf, zentrale Filtratleitung
8a, 8b, 8c lokale erste Filtratleitung, erste Leitung zur Filtratableitung
8a', 8b', 8c' lokale zweite Filtratleitung, zweite Leitung zur Filtratzuleitung
8' gemeinsamer Abschnitt der zweiten Filtratleitung
9 Anlagensteuerung
10 Druckreduzierelement
11 Eingangsdrucksensor
12 Ausgangsdrucksensor
13 Auswerteeinheit
14 Rückspüldrucksensor
15 Toleranzband
16 Überwachungseinheit
17 Volumenzähler
18 Temperatursensor
20 Rohwasserquelle
30 Verbraucher
40 freier Ablauf
Za, Zb, Zc Zulaufventile
Ra, Rb, Rc Retentatventile
Fa, Fb, Fc Filtratventile
Sa, Sb, Sc Rückspülventile

## Patentansprüche

1. Verfahren zur Überwachung der Integrität einer Ultrafiltrationsmembran (6) in einem Filtermodul (3a, 3b, 3c) einer Ultrafiltrationsanlage (1) zur Trinkwasseraufbereitung während eines Rückspülbetriebs, in dem zur Reinigung der Membran (6) Filtrat zu einer Filtratseite (5b) des Filtermoduls (3a, 3b, 3c) geleitet wird und eine Rohwasserseite (5a) des Filtermoduls (3a, 3b, 3c) über eine Retentatleitung (7, 7a, 7b, 7c) mit einem Ablauf (40) zur Abscheidung von Retentat verbunden ist, **dadurch gekennzeichnet, dass** das Volumen (V_{R}) des innerhalb eines Zeitraums (t_{M}) abgeschiedenen Retentats ermittelt wird und dieses Volumen (V_{R}) oder ein daraus berechneter Wert (V_{R_corr}, Q_{R}, Q_{R_corr}, L_{P}, L_{P_corr}) mit einem Erwartungswert (Vo, Qo, Lo) verglichen wird, wobei ein Integritätsverlust angenommen wird, wenn das Volumen (V_{R}) oder der daraus berechnete Wert (V_{R_corr}, Q_{R}, Q_{R_corr}, L_{P}, L_{P_corr}) über dem Erwartungswert (Vo, Qo, Lo) liegt.

2. Verfahren nach Anspruch 1, **dadurch gekennzeichnet, dass** der Zeitraum (t_{M}) die gesamte Dauer des Rückspülbetriebs umfasst und das Volumen (V_{R}) des während des Rückspülbetriebs abgeschiedenen Retentats ermittelt wird.

3. Verfahren nach Anspruch 1, **dadurch gekennzeichnet, dass** der Zeitraum (t_{M}) nur einen Teil der Dauer des Rückspülbetriebs umfasst und am Ende des Rückspülbetriebs liegt.

4. Verfahren nach einem der vorherigen Ansprüche, **dadurch gekennzeichnet, dass** die Ermittlung des Volumens (V_{R}) mittels eines Volumenzählers (17) in der Retentatleitung (7) erfolgt.

5. Verfahren nach Anspruch 4, **dadurch gekennzeichnet, dass** der Volumenzähler (17) einen Impulsgeber aufweist und die Anzahl Impulse während des Zeitraums gezählt und mit einem Volumenwert pro Impuls multipliziert werden.

6. Verfahren nach einem der vorherigen Ansprüche, **dadurch gekennzeichnet, dass** der aus dem Volumen (V_{R}) berechnete Wert der durchschnittliche Retentatvolumenstrom (Q_{R}) oder die durchschnittliche Permeabilität (L_{P}) der Membran (6) im Zeitraum (t_{M}) ist.

7. Verfahren nach einem der vorherigen Ansprüche, **dadurch gekennzeichnet, dass** der aus dem Volumen (V_{R}) berechnete Wert (V_{R_corr}, Q_{R}, Q_{R_corr}, L_{P}, L_{P_corr}) ein durch Normierung auf einen Rückspülreferenzdruck (P_{SP0}) erhaltener Korrekturwert (V_{R_corr}, Q_{R_corr}, L_{P_corr}) ist, wobei der Rückspüldruck (Pₛₚ) auf der Filtratseite (5a) gemessen und bei der Normierung verwendet wird.

8. Verfahren nach Anspruch 7, **dadurch gekennzeichnet, dass** der Korrekturwert (V_{R_corr}, Q_{R_corr}, L_{P_corr}) dadurch berechnet wird, dass das Volumen (V_{R}) oder ein daraus berechneter Volumenstrom (Q_{R}) mit dem Verhältnis aus einem Rückspülreferenzdruck (P_{SP0}) zu dem auf der Filtratseite gemessenen Rückspüldruck (P_{SP}) multipliziert wird, oder dass eine aus dem Volumen (V_{R}) berechnete Permeabilität (L_{P}) der Membran (6) mit dem Verhältnis aus dem auf der Filtratseite gemessenen Rückspüldruck (P_{SP}) zu einem Rückspülreferenzdruck (P_{SP0}) multipliziert wird,

9. Verfahren nach einem der vorherigen Ansprüche, **dadurch gekennzeichnet, dass** der aus dem Volumen (V_{R}) berechnete Wert ein Korrekturwert (V_{R_corr}, Q_{R_corr}, L_{P_corr}) ist, wobei die Temperatur (T_{R}) des Retentats bestimmt und bei der Berechnung des Korrekturwerts (V_{R_corr}, Q_{R_corr}, L_{P_corr}) verwendet wird.

10. Verfahren nach Anspruch 9, **dadurch gekennzeichnet, dass** die Berechnung des Korrekturwerts (V_{R_corr}, Q_{R_corr}, L_{P_corr}) dadurch erfolgt, dass aus der Temperatur (T_{R}) des Retentats wenigstens ein auf eine Bezugstemperatur (T₀) bezogener Korrekturfaktor (K_{T}, K_{ρ}) berechnet wird, mit dem das Volumen (V_{R}), ein daraus berechneter Volumenstrom (Q_{R}) oder eine daraus berechnete Permeabilität (L_{P}) der Membran (6) multipliziert wird.

11. Verfahren nach einem der vorherigen Ansprüche, **dadurch gekennzeichnet, dass** der Zeitraum (t_{M}) zwischen 5 und 60 Sekunden beträgt.

12. Verfahren nach einem der vorherigen Ansprüche, **dadurch gekennzeichnet, dass** der Erwartungswert dem maximalen Volumen entspricht, das bei der Rückspülung eines sauberen Filtermoduls mit sauberem Wasser bei einer Bezugstemperatur (T₀) und einem Rückspülreferenzdruck (P_{SP0}) erreicht werden kann.

13. Verfahren nach einem der vorherigen Ansprüche, **dadurch gekennzeichnet, dass** eine Warnmeldung ausgegeben wird, wenn der Erwartungswert überschritten wird.

14. Ultrafiltrationsanlage (1) zur Trinkwasseraufbereitung umfassend wenigstens ein Filtermodul (3a, 3b, 3c) mit einer Ultrafiltrationsmembran (6), einen Rohwasserzulauf (2) und einen Filtratablauf (8), zwischen denen das Filtermodul (3a, 3b, 3c) liegt, wobei zur Reinigung der Membran (6) in einem Rückspülbetrieb Filtrat zu einer Filtratseite (5b) des Filtermoduls (3a, 3b, 3c) leitbar ist und eine Rohwasserseite des Filtermoduls (3a, 3b, 3c) über eine Retentatleitung (7, 7a, 7b, 7c) mit einem Ablauf (40) zur Abscheidung von Retentat verbindbar ist, **gekennzeichnet durch** eine Überwachungseinheit (16) zur Überwachung der Integrität der Ultrafiltrationsmembran (6) während des Rückspülbetriebs, die eingerichtet ist, das Verfahren nach einem der Ansprüche 1 bis 13 auszuführen.

## Claims

1. Method for monitoring the integrity of an ultrafiltration membrane (6) in a filter module (3a, 3b, 3c) of an ultrafiltration system (1) for drinking water treatment during a backwashing operation in which filtrate is directed to a filtrate side (5b) of the filter module (3a, 3b, 3c) for cleaning the membrane (6), and a raw water side (5a) of the filter module (3a, 3b, 3c) is connected via a retentate line (7, 7a, 7b, 7c) to an outlet (40) for discharging retentate, **characterised in that** the volume (V_{R}) of the retentate discharged within a time period (t_{M}) is determined and this volume (V_{R}) or a value (V_{R_corr}, Q_{R}, Q_{R_corr}, L_{P}, L_{P_corr}) calculated therefrom is compared with an expected value (V_{O}, Q_{O}, L_{O}), wherein a loss of integrity is assumed if the volume (V_{R}) or the value (V_{R_corr}, Q_{R}, Q_{R_corr}, L_{P}, L_{P_corr}) calculated therefrom exceeds the expected value (V_{O}, Q_{O}, L_{O}).

2. Method according to claim 1**, characterised in that** the time period (t_{M}) comprises the entire duration of the backwashing operation and the volume (V_{R}) of the retentate discharged during the backwashing operation is determined.

3. Method according to claim 1, **characterised in that** the time period (t_{M}) comprises only part of the duration of the backwashing operation and is located at the end of the backwashing operation.

4. Method according to any one of the preceding claims, **characterised in that** the volume (V_{R}) is determined by means of a volume meter (17) in the retentate line (7).

5. Method according to claim 4, **characterised in that** the volume meter (17) has a pulse generator and the number of pulses during the time period is counted and multiplied by a volume value per pulse.

6. Method according to any one of the preceding claims, **characterised in that** the value calculated from the volume (V_{R}) is the average retentate volume flow rate (Q_{R}) or the average permeability (L_{P}) of the membrane (6) during the time period (t_{M}).

7. Method according to any one of the preceding claims, **characterised in that** the value (V_{R_corr}, Q_{R}, Q_{R_corr}, L_{P}, L_{P_corr}) calculated from the volume (VR) is a corrected value (V_{R_corr}, Q_{R_corr}, L_{P_corr}) obtained by normalisation to a backwashing reference pressure (P_{SP0}), wherein the backwashing pressure (Pₛₚ) is measured on the filtrate side (5a) and is used in the normalisation.

8. Method according to claim 7, **characterised in that** the corrected value (V_{R_corr}, Q_{R_corr}, L_{P_corr}) is calculated **in that** the volume (V_{R}) or a volume flow rate (Q_{R}) calculated therefrom is multiplied with the ratio of a backwashing reference pressure (P_{SP0}) to the backwashing pressure (P_{SP}) measured on the filtrate side, or **in that** a permeability (L_{P}) of the membrane (6) calculated from the volume (V_{R}) is multiplied with the ratio of the backwashing pressure (P_{SP}) measured on the filtrate side to a backwashing reference pressure (P_{SP0}).

9. Method according to any one of the preceding claims, **characterised in that** the value calculated from the volume (V_{R}) is a corrected value (V_{R_corr}, Q_{R_corr}, L_{P_corr}), wherein the temperature (T_{R}) of the retentate is determined and used in the calculation of the corrected value (V_{R_corr}, Q_{R_corr}, L_{P_corr}).

10. Method according to claim 9, **characterised in that** the corrected value (V_{R_corr}, Q_{R_corr}, L_{P_corr}) is calculated by calculating, from the temperature (T_{R}) of the retentate and relative to a reference temperature (T₀), at least one correction factor (K_{T}, K_{ρ}) by which the volume (V_{R}), a volume flow rate (Q_{R}) calculated therefrom or a permeability (L_{P}) of the membrane (6) calculated therefrom is multiplied.

11. Method according to any one of the preceding claims, **characterised in that** the time period (tM) is between 5 and 60 seconds.

12. Method according to any one of the preceding claims, **characterised in that** the expected value corresponds to the maximum volume which can be achieved when backwashing a clean filter module with clean water at a reference temperature (T₀) and a backwashing reference pressure (P_{SP0}).

13. Method according to any one of the preceding claims, **characterised in that** a warning message is output if the expected value is exceeded.

14. Ultrafiltration system (1) for drinking water treatment, comprising at least one filter module (3a, 3b, 3c) having an ultrafiltration membrane (6), a raw water inlet (2) and a filtrate outlet (8), between which the filter module (3a, 3b, 3c) is located, wherein, for cleaning the membrane (6) in a backwashing operation, filtrate can be directed to a filtrate side (5b) of the filter module (3a, 3b, 3c) and a raw water side of the filter module (3a, 3b, 3c) can be connected via a retentate line (7, 7a, 7b, 7c) to an outlet (40) for discharging retentate, **characterised by** a monitoring unit (16) for monitoring the integrity of the ultrafiltration membrane (6) during the backwashing operation, said monitoring unit (16) being configured to carry out the method according to any one of claims 1 to 13.

## Revendications

1. Procédé de surveillance de l'intégrité d'une membrane d'ultrafiltration (6) dans un module de filtration (3a, 3b, 3c) d'un système d'ultrafiltration (1) pour le traitement de l'eau potable pendant une opération de rétrolavage au cours de laquelle du filtrat est dirigé vers un côté filtrat (5b) du module de filtration (3a, 3b, 3c) pour nettoyer la membrane (6), et un côté eau brute (5a) du module de filtration (3a, 3b, 3c) est relié, par l'intermédiaire d'une conduite de rétentat (7, 7a, 7b, 7c), à une sortie (40) pour évacuer du rétentat, **caractérisé en ce que** le volume (V_{R}) du rétentat évacué pendant une période de temps (t_{M}) est déterminé et ce volume (V_{R}) ou une valeur (V_{R_corr}, Q_{R}, Q_{R_corr}, L_{P}, L_{P_corr}) calculée à partir de celui-ci est comparé à une valeur attendue (V_{O}, Q_{O}, L_{O}), une perte d'intégrité étant supposée si le volume (V_{R}) ou la valeur (V_{R_corr}, Q_{R}, Q_{R_corr}, L_{P}, L_{P_corr}) calculée à partir de celui-ci dépasse la valeur attendue (V_{O}, Q_{O}, L_{O}).

2. Procédé selon la revendication 1, **caractérisé en ce que** la période de temps (t_{M}) comprend la durée totale de l'opération de rétrolavage et le volume (V_{R}) du rétentat évacué pendant l'opération de rétrolavage est déterminé.

3. Procédé selon la revendication 1, **caractérisé en ce que** la période de temps (t_{M}) comprend seulement une partie de la durée de l'opération de rétrolavage et se situe à la fin de l'opération de rétrolavage.

4. Procédé selon l'une quelconque des revendications précédentes, **caractérisé en ce que** le volume (V_{R}) est déterminé au moyen d'un compteur volumétrique (17) dans la conduite de rétentat (7).

5. Procédé selon la revendication 4, **caractérisé en ce que** le compteur volumétrique (17) comporte un générateur d'impulsions et le nombre d'impulsions pendant la période de temps est compté et multiplié par une valeur de volume par impulsion.

6. Procédé selon l'une quelconque des revendications précédentes, **caractérisé en ce que** la valeur calculée à partir du volume (V_{R}) est le débit volumique moyen de rétentat (Q_{R}) ou la perméabilité moyenne (L_{P}) de la membrane (6) pendant la période de temps (t_{M}).

7. Procédé selon l'une quelconque des revendications précédentes, **caractérisé en ce que** la valeur (V_{R_corr}, Q_{R}, Q_{R_corr}, L_{P}, L_{P_corr}) calculée à partir du volume (V_{R}) est une valeur corrigée (V_{R_corr}, Q_{R}, Q_{R_corr}, L_{P}, L_{P_corr}) obtenue par normalisation à une pression de référence de rétrolavage (P_{SP0}), la pression de rétrolavage (Pₛₚ) étant mesurée du côté filtrat (5a) et utilisée dans la normalisation.

8. Procédé selon la revendication 7, **caractérisé en ce que** la valeur corrigée (V_{R_corr}, Q_{R}, Q_{R_corr}, L_{P}, L_{P_corr}) est calculée en multipliant le volume (V') ou un débit volumique (Q_{R}) calculé à partir de celui-ci par le rapport entre une pression de référence de rétrolavage (P_{SP0}) et la pression de rétrolavage (P_{SP}) mesurée du côté filtrat, ou en multipliant une perméabilité (L_{P}) de la membrane (6) calculée à partir du volume (V_{R}) par le rapport entre la pression de rétrolavage (P_{SP}) mesurée du côté filtrat et une pression de référence de rétrolavage (P_{SP0}).

9. Procédé selon l'une quelconque des revendications précédentes, **caractérisé en ce que** la valeur calculée à partir du volume (V_{R}) est une valeur corrigée (V_{R_corr}, Q_{R_corr}, L_{P_corr}), la température (T_{R}) du rétentat étant déterminée et utilisée dans le calcul de la valeur corrigée (V_{R_corr}, Q_{R_corr}, L_{P_corr}).

10. Procédé selon la revendication 9, **caractérisé en ce que** la valeur corrigée (V_{R_corr}, Q_{R_corr}, L_{P_corr}) est calculée en calculant, à partir de la température (T_{R}) du rétentat et par rapport à une température de référence (T₀), au moins un facteur de correction (K_{T}, Kρ) par lequel est multiplié le volume (V_{R}), un débit volumique (Q_{R}) calculé à partir de celui-ci ou une perméabilité (L_{P}) de la membrane (6) calculée à partir de celui-ci.

11. Procédé selon l'une quelconque des revendications précédentes, **caractérisé en ce que** la période de temps (t_{M}) est comprise entre 5 et 60 secondes.

12. Procédé selon l'une quelconque des revendications précédentes, **caractérisé en ce que** la valeur attendue correspond au volume maximal qui peut être atteint lors du rétrolavage d'un module de filtration propre avec de l'eau propre à une température de référence (T₀) et à une pression de référence de rétrolavage (P_{SP0}).

13. Procédé selon l'une quelconque des revendications précédentes, **caractérisé en ce que** un message d'avertissement est émis si la valeur attendue est dépassée.

14. Système d'ultrafiltration (1) pour le traitement de l'eau potable, comprenant au moins un module de filtration (3a, 3b, 3c) comportant une membrane d'ultrafiltration (6), une entrée d'eau brute (2) et une sortie de filtrat (8), entre lesquelles se situe le module de filtration (3a, 3b, 3c), du filtrat pouvant être dirigé vers un côté filtrat (5b) du module de filtration (3a, 3b, 3c) pour nettoyer la membrane (6) lors d'une opération de rétrolavage, et un côté eau brute du module de filtration (3a, 3b, 3c) pouvant être relié, par l'intermédiaire d'une conduite de rétentat (7, 7a, 7b, 7c), à une sortie (40) pour évacuer du rétentat, **caractérisé par** une unité de surveillance (16) pour surveiller l'intégrité de la membrane d'ultrafiltration (6) pendant l'opération de rétrolavage, ladite unité de surveillance (16) étant configurée pour mettre en œuvre le procédé selon l'une quelconque des revendications 1 à 13.
